# EUROPÄISCHE PATENTSCHRIFT

(11) **EP 1 933 055 B1**
(45) Veröffentlichungstag und Bekanntmachung des Hinweises auf die Patenterteilung: **17.11.2010**
(21) Anmeldenummer: 07018032.8
(22) Anmeldetag: 14.09.2007
(51) Int. Cl.: F16D 65/12

(54) **Zusammengesetzte Bremsscheibe**
Composite brake disc
Disque de frein composé

(30) Priorität: 13.12.2006 DE 102006058714
(43) Veröffentlichungstag der Anmeldung: 18.06.2008
(73) Patentinhaber: AUDI AG, 85045 Ingolstadt (DE)
(72) Erfinder: Guether Hans-Michael, 61462 Königstein (DE)
(74) Vertreter: Asch, Konrad

(56) Entgegenhaltungen:
- WO-A-2004/102027
- DE-A1- 1 775 685
- DE-A1- 10 262 070
- DE-A1- 19 815 807
- DE-A1- 19 915 215
- US-A- 6 119 827

## Beschreibung

Die Erfindung bezieht sich auf eine zusammengesetzte Bremsscheibe, umfassend einen Bremsscheibenring und einen Bremsscheibentopf sowie Befestigungsmittel zur Verbindung eines Bremsscheibenrings mit einem Bremsscheibentopf in einer zusammengesetzten Bremsscheibe.

Bremsscheiben unterliegen hohen thermischen und mechanischen Beanspruchungen. Wenn der Bremsscheibentopf und der Bremsscheibenring aus Materialien mit unterschiedlichen Wärmeausdehnungskoeffizienten hergestellt werden, oder wenn eine unterschiedliche Wärmeverteilung an der Bremsscheibe auftritt, so können unerwünscht hohe Spannungen zwischen dem Bremsscheibentopf und dem Bremsscheibenring entstehen. Diese Spannungen können zu einer wellenförmigen Verformung des Bremsscheibenrings führen.

In der DE 43 32 951 A1 wird zur Lösung dieses Problems vorgeschlagen, den Bremsscheibenring an dem Bremsscheibentopf zwar drehfest, jedoch radial schwimmend zu lagern. Einerseits wird so eine ausreichende Drehmomentübertragung zu der Radachse gewährleistet, andererseits ermöglicht die schwimmende Lagerung, dass sich sowohl der Bremsscheibenring als auch der Bremsscheibentopf unabhängig voneinander ohne Gefahr von Verspannungen in Radialrichtung ausdehnen können. Auf diese Weise ist es möglich, den Topf mit einem geringen Bauteilgewicht beispielsweise aus Aluminium herzustellen. Zur Halterung des Bremsscheibenrings an dem Bremsscheibentopf sind in Letzterem eine Vielzahl von Verbindungselementen in Form von radial abstehenden Stiften eingegossen. Diese Stifte werden in radialen Bohrungen an dem inneren Umfang des Bremsscheibenrings geführt und ermöglichen eine Relativbewegung beider Komponenten in radialer Richtung. Da die Stifte radial in alle Richtungen von dem Bremsscheibentopf abstehen, ist die Demontage des Bremsscheibenrings nach dem Zusammenfügen nicht mehr möglich. Durch diese Konstruktion werden auch Schwingungen ungedämpft von dem Bremsscheibenring über den Bremsscheibentopf auf die Bremsenkomponenten und Achsbauteile übertragen, wodurch Geräusche verursacht werden können.

Ähnliche Probleme ergeben sich bei der in der DE 39 20 418 A1 offenbarten Bremsscheibe. Bei unterschiedlichen Wärmeausdehnungen ist dort eine radial elastische Bewegung zwischen dem Bremsscheibentopf und dem Bremsscheibenring möglich. Dazu sind an dem Bremsscheibentopf radiale Nuten ausgebildet, in die an dem Bremsscheibenring angebrachte Stege oder Vorsprünge radial verschieblich eingreifen. Die Herstellung des Bremsscheibenrings erfolgt in einem Verbundgießverfahren, bei dem der Bremsscheibentopf in die Gussform für den Bremsscheibenring eingelegt wird, so dass Material des Bremsscheibenring in die Nuten gelangt und somit der Bremsscheibentopf und die Stege oder Vorsprünge des Bremsscheibenrings wie Zähne ineinander greifen. Die aus diesem Stand der Technik bekannte radiale Verschieblichkeit von Bremsscheibentopf und Bremsscheibenring begünstigt jedoch das Auftreten von Schwingungen im Bremsscheibenring. Dies führt zu Verformungen des Bremsscheibenrings und damit zu Quietschgeräuschen und Bremsenrubbeln, also zu einer Komfortbeeinträchtigung.

In der Patentanmeldung WO 2004/102 027 A1 ist eine Bremsscheibe offenbart mit einem Reibring und einem Bremsscheibentopf, wobei beide jeweils einen Ringsteg aufweisen, und diese Ringstege sich konzentrisch überlappen. Die Ringstege weisen jeweils Ausnehmungen auf, durch die eine Verbindungsanordnung in Form eines Verbindungsbolzens geführt ist. Als spezielle mögliche Ausführungsformen werden Verschraubungen und Nietanbindungen genannt. In der beschriebenen Erfindung werden durchweg Verbindungsbolzen mit Gewinde eingesetzt. Es wird erwähnt, dass auch beispielsweise Nietverbindungen sowie Verschweißen oder Verlöten anwendbar seien.

Aus der Patentanmeldung DE 199 15 215 A1 ist eine zusammengesetzte Bremsscheibe bekannt, bei der Reibring und Bremsscheibentopf über Verbindungsbolzen befestigt sind, die in Langlöcher eingesetzt sind. Die Verbindungsbolzen können als Schrauben, Nieten oder mit Sicherungsmitteln festgehaltene Bolzen ausgebildet werden und weisen Innengewinde auf, in die Werkzeuge zum Abziehen eingeschraubt werden können.

In der gattungsbildenden Offenlegungsschrift DE 198 15 807 A1 wird eine zusammengesetzte Bremsscheibe beschrieben, bei der ein Bremsscheibenring mit einem Bremsscheibentopf durch Niete oder Bolzen verbunden ist. Dabei wird eine Dämpfung von Schwingungen erreicht durch die mechanische Trennung von Bremsscheibentopf und Bremsscheibenring und eine durch den Überstand einer den Niet oder Bolzen umgebenden Hülse definierte Vorspannung der Komponenten, oder das Einbringen eines hochdämpfenden Materials zwischen die aneinanderliegenden Flächen von Bremsscheibenring und Bremsscheibentopf.

Aus der Patentschrift DE 199 43 537 C1 ist eine Konstruktion bekannt, bei der ein Verbindungselement mit einem Kopf und einem hülsenförmigen Schaft den Bremsscheibenring und Bremsscheibentopf zusammenhält. Im Kopf ist ein Gewinde zur Aufnahme einer den Schaft des Verbindungselements durchdringende Schraube vorgesehen, wobei weiter ein in einer Ebene senkrecht zur Achse der Hülse verlaufenden Schlitz den Kopfbereich halb durchteilt, und das Gewinde lediglich in dem Bereich zwischen dem Schlitz und dem vom Schaft abgewandten Kopfende vorgesehen ist. Mit dieser Konstruktion ergibt sich eine Federwirkung, die Bremsscheibenring und Bremsscheibentopf zusammenpresst.

Vor diesem Hintergrund liegt der Erfindung die Aufgabe zugrunde, für eine zusammengesetzte Bremsscheibe mit einem Bremsscheibentopf und einem daran befestigten Bremsscheibenring eine Befestigungsmöglichkeit zu finden, die unterschiedliches Wärmeausdehnungsverhalten beider Komponenten toleriert, ohne Einbußen an der Festigkeit der Konstruktion und ohne Begünstigung des Entstehens von Schwingungen, wobei zusätzliche Bauteile vermieden werden sollen.

Diese Aufgabe wird durch die Merkmale des Anspruchs 1 gelöst.

Diese Konstruktion erfordert kein zusätliches federelastisches Element zu dem Verbindungsmittel zwischen Bremsscheibentopf und Bremsscheibenring, ist spielfrei in Umfangsrichtung auszuführen und erlaubt dennoch ein radiales Spiel zur Kompensation des unterschiedlichen thermischen Ausdehnungsverhaltens von Bremsscheibenring und Bremsscheibentopf. Weitere bevorzugte Ausführungsformen ergeben sich gemäß den Unteransprüchen.

Durch die axiale Elastizität der Blindnieten, die durch die Wahl des dafür verwendeten Werkstoffs und die Dimensionierung des Blindniets gezielt eingestellt werden kann, wird eine deutliche Verringerung der Schwingungsneigung möglich. Die freie radiale Bewegungsmöglichkeit zwischen dem Reibring und dem Bremsscheibentopf wird ermöglicht durch Langlöcher in mindestens einer der Komponenten Bremsscheibenring und Bremsscheibentopf, wobei es zu bevorzugen ist, Langlöcher in dem Bremsscheibentopf vorzusehen, insbesondere wenn dieser aus einem metallischen Werkstoff ausgeführt ist. Die elastische Anbindung und die Vielzahl der dämpfenden Reibstellen reduziert die Verformung der Bremsscheibe und bewirkt die Unterdrückung von Schwingungen, welche letztlich zu einem verbesserten Komfortverhalten führen.

Durch die Aufteilung der Bremsscheibe in zwei separate Komponenten, nämlich den Bremsscheibentopf und den Reibring, können diese aus unterschiedlichen Werkstoffen hergestellt werden. Die Verminderung der Verformungen ermöglicht die Verwendung von Keramikwerkstoffen für den Bremsscheibenring.

Nachfolgend wird die Erfindung anhand der folgenden Zeichnungen näher erläutert. Die Zeichnungen zeigen in:

Fig. 1 eine Schnittansicht eines Ausführungsbeispiels einer Bremsscheibe **1** mit einer erfindungsgemäßen Befestigungseinrichtung **4** für Bremsscheibenring **2** und Bremsscheibentopf 3,

Fig. 2 Schnitte durch verschiedene Ausführungsformen der gemäß der vorliegenden Erfindung brauchbaren Blindnieten **4,** wobei die Fig. 2a einen Becherniet **41** zeigt, die Fig. 2b einen Zugdornniet **42,** die Fig. 2c einen Durchziehrnet **43,** und die Fig. 2d einen demontierbaren Durchziehniet **44.**

Gemäß einer vorteilhaften Ausgestaltung der Erfindung weist der Bremsscheibentopf **3** Langlöcher für die Befestigungsmittel auf, wobei die längste Erstreckung der Langlöcher parallel zu einem durch die Mitte des Langlochs gehenden Radius ist. Dabei ist es bevorzugt, die Länge (größter Durchmesser) und die Breite (kleinster Durchmesser) der Langlöcher so zu wählen, dass das Verhältnis der Länge zur Breite mindestens 2,0, besonders bevorzugt mindestens 2,5, und insbesondere mindestens 3,0 beträgt. In bevorzugter Weise ist der Bremsscheibentopf **3** aus einem metallischen Werkstoff ausgeführt.

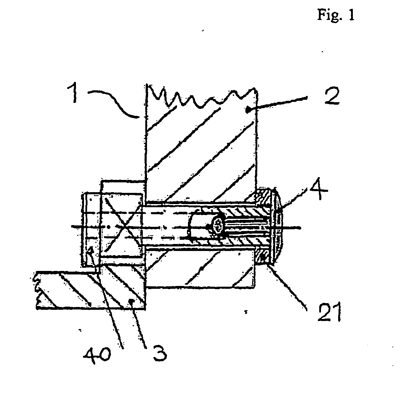

Im Einzelnen zeigt die Fig. 1 einen Schnitt durch eine Bremsscheibe **1,** in dem die Befestigung des Bremsscheibenrings **2** an dem Bremsscheibentopf **3** mittels eines Durchziehniets **43** dargestellt ist. In der hier dargestellten bevorzugten Form ist in dem im Bremsscheibentopf eingebrachten Langloch eine zylindrische Niethülse **40** vorgesehen, die bei der Fixierung des Durchziehniets **43** nicht verformt wird und dadurch, die radiale Beweglichkeit des Befestigungsmittels in dem Langloch sicherstellt. Zwischen Nietkopf und dem Bremsscheibenring **2** ist noch eine Beilagscheibe **21** vorgesehen. Mit den erfindungsgemäßen Befestigungsmitteln ist der Bremsscheibenring **2** mit dem Bremsscheibentopf **3** in Umfangsrichtung drehfest verbunden, jedoch radial schwimmend gehalten. In Axialrichtung wirkende Kräfte zwischen Bremsscheibentopf **3** und Bremsscheibenring **2** werden durch die elastische Verbindung durch den Blindniet **4** aufgefangen.

Durch die unabhängige radiale Bewegungsmöglichkeit des Bremsscheibenrings **2** und des Bremsscheibentopfs **3** relativ zueinander können temperaturbedingte Verspannungen des Bremsscheibenrings **2** gering gehalten werden. Dies wirkt sich positiv auf das Schwingungsverhalten aus.

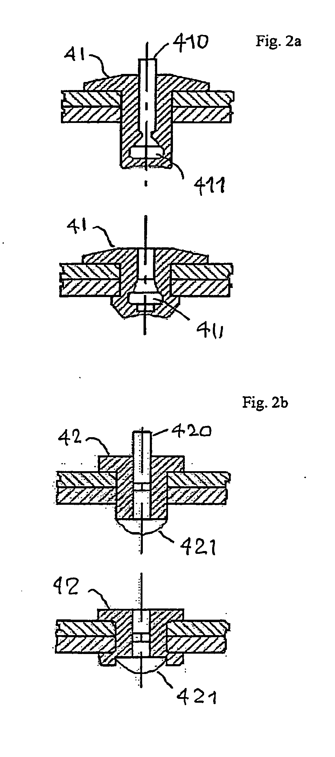

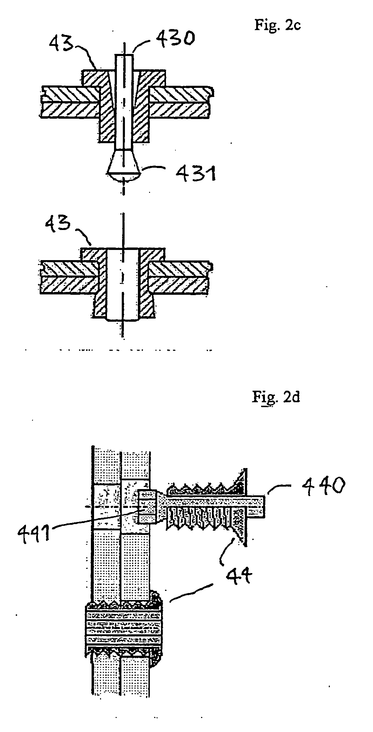

Anstelle des in der Zeichnung Fig. 1 dargestellten Durchziehniets können ebenso die in den Figg. 2a, 2b und 2d dargestellten Ausführungsformen von Blindnieten als Befestigungsmittel eingesetzt werden. Es ist auch bei diesen Befestigungsmitteln bevorzugt, eine Hülse **40** auf der vom Nietkopf abgewandten Seite zu verwenden, insbesondere, wenn auf dieser Seite ein Langloch vorgesehen ist.

Die in Fig. 2a bis 2d dargestellten Typen von Blindnieten zeichnen sich dadurch aus, dass sie ohne Schlagbeanspruchung (im Gegensatz zu "angeschlagenen" Kopf-Nieten) montiert werden. Der in Fig. 2a dargestellte Becherniet **41** (auch Dicht-Blindniet genannt) hat den Vorteil eines geschlossenen Schaftendes; er wird, wie sämtliche hier dargestellten Blindniete, durch Ziehen eines Dorns **410** am herausstehenden Schaftende gestaucht, bis der Dorn abreißt, hier an einer dafür vorgesehenen Sollbruchstelle, wobei der Kopf **411** des Dorns im Niet verbleibt. Auch bei dem in Fig. 2b dargestellten Zugdornniet **42** (allgemeine Form eines Blindniets gemäß DIN 7337) wird durch Ziehen eines Dorns 420 der Niet am herausstehenden Schaftende gestaucht, bis der Dorn 420 an einer dafür vorgesehenen Sollbruchstelle abreißt; der Kopf **421** des Dorns verbleibt auf und in dem Niet. In der Fig. 2c ist ein Durchziehniet **43** dargestellt; hier wird ein Dorn 430 zumindest teilweise, oder wie hier dargestellt, gänzlich durch die Niethülse gezogen und staucht diese dabei. Es existieren sowohl Ausführungsformen, bei denen der Dorn bis zu einer Verengung in der Hülse gezogen werden kann und dann abreißt (so wie in Fig. 1 dargestellt) als auch die in der Fig. 2c dargestellten Ausführungsformen, bei denen der Dorn **430** ganz durch das Innere der Hülse gezogen wird und diese im Sinne eines Fließformprozesses staucht unter lateraler Ausdehnung. Bei einem demontierbaren Durchziehniet **44** gemäß Fig. 2d wird ein Dorn **440,** dessen Spitze **441** als Außensechskant ausgeführt ist, durch die Hülse des Niets gezogen und formt dabei ein Innensechskantprofil in der Hülse. Ein solcher innen geformter Niet kann nach der Montage mit Hilfe eines Sechskantschlüssels wieder entfernt werden.

Die erfindungsgemäße Konstruktion mit den dafür vorgesehenen Befestigungsmitteln ermöglicht es, unterschiedliche Werkstoffe für Bremsscheibenring und Bremsscheibentopf mit unterschiedlichen thermischen Ausdehnungskoeffizienten einzusetzen. Insbesondere ist es dadurch möglich, keramische Materialien oder faserverstärkte keramische Materialien für den Bremsscheibenring einzusetzen. Besonders geeignet sind derartige Konstruktionen für Carbon-Keramik-Bremsscheiben, also mit Fasern aus Kohlenstoff verstärkte keramische Werkstoffe wie C/SiC, dessen Matrix im wesentlichen Siliciumcarbid sowie nicht umgesetztes Silicium und restlichen Kohlenstoff enthält. Die erfindungsgemäß vorgesehenen Blindniete als Befestigungsmittel ergeben auf unkomplizierte Weise eine Verbindung, die sowohl in Umfangsrichtung hochbelastbar ist und spielfrei ausgeführt werden kann, als auch eine Verbindung mit elastischem axialem Spiel und der Möglichkeit der Fixierung trotz unterschiedlichem Ausdehnungsverhalten bei Erwärmen. Im bekannten Stand der Technik ist einer derartige einfache und wirtschaftlich günstige Lösung noch nicht beschrieben gewesen.

Die Erfindung ist jedoch nicht auf das dargestellte Ausführungsbeispiel und die erläuterten Abwandlungen beschränkt, sondern umfasst vielmehr alle durch die Patentansprüche definierten Gestaltungsformen.

### Bezugszeichenliste

- 1: Bremsscheibe
- 2: Bremsscheibenring
- 21: Beilagscheibe
- 3: Bremsscheibentopf
- 4: Befestigungsmittel
- 40: Hülse
- 41: Becherniet
- 410: Dorn
- 411: Kopf des Dorns 410
- 42: Zugdornniet
- 420: Dorn
- 421: Kopf des Dorns 420
- 43: Durchziehniet
- 430: Dorn
- 431: Kopf des Dorns 430
- 44: demontierbarer Durchziehniet
- 440: Dorn
- 441: Spitze des Dorn 440 mit Sechskantprofil

## Patentansprüche

1. Zusammengesetzte Bremsscheibe (1) umfassend einen Bremsscheibenring (2) und einen Bremsscheibentopf (3) mit mindestens drei Befestigungsmitteln (4) zur Verbindung von Bremsscheibenring (2) und Bremsscheibentopf (3),
**dadurch gekennzeichnet, dass**
die Befestigungsmittel (4) Blindnieten mit Haltkraft in beiden Richtungen parallel zur Nietachse sind, ausgewählt aus Bechernieten (41), Zugdornnieten (42), Durchziehrnieten (43) und demontierbaren Durchziehnieten (44).

2. Zusammengesetzte Bremsscheibe nach Anspruch 1, **dadurch gekennzeichnet, dass** die Befestigungsvorrichtungen (4) Durchziehnieten (43) sind.

3. Zusammengesetzte Bremsscheibe (1) nach Anspruch 1, **dadurch gekennzeichnet, dass** der Bremsscheibentopf (3) Langlöcher für die Befestigungsmittel aufweist, wobei die längste Erstreckung der Langlöcher parallel zu einem durch die Mitte des Langlochs gehenden Radius ist.

4. Zusammengesetzte Bremsscheibe (1) nach Anspruch 1, **dadurch gekennzeichnet, dass** der Bremsscheibentopf (3) aus einem metallischen Werkstoff ausgeführt ist.

5. Zusammengesetzte Bremsscheibe (1) nach Anspruch 1, **dadurch gekennzeichnet, dass** der Bremsscheibenring (2) aus einem keramischen Werkstoff ausgeführt ist.

6. Zusammengesetzte Bremsscheibe nach Anspruch 5, **dadurch gekennzeichnet, dass** der keramische Werkstoff Verstärkungsfasern enthält.

## Claims

1. Composite brake disc (1) comprising a brake-disc ring (2) and a brake-disc hub (3) with at least three fastening means (4) for connecting the brake-disc ring (2) and the brake-disc hub (3), **characterized in that** the fastening means (4) are blind rivets with a holding force in both directions parallel to the rivet axis, selected from bucket rivets (41), drawing-pin rivets (42), plunge rivets (43) and plunge rivets (44) which can be dismantled.

2. Composite brake disc according to Claim 1, **characterized in that** the fastening devices (4) are plunge rivets (43).

3. Composite brake disc (1) according to Claim 1, **characterized in that** the brake-disc hub (3) has slots for the fastening means, the longest extent of the slots being parallel to a radius which passes through the centre of the slot.

4. Composite brake disc (1) according to Claim 1, **characterized in that** the brake-disc hub (3) is made from a metallic material.

5. Composite brake disc (1) according to Claim 1, **characterized in that** the brake-disc ring (2) is made from a ceramic material.

6. Composite brake disc according to Claim 5, **characterized in that** the ceramic material contains reinforcing fibres.

## Revendications

1. Disque de frein composite (1) comprenant une bague de disque de frein (2) et une nacelle de disque de frein (3) avec au moins trois moyens de fixation (4) pour la connexion de la bague de disque de frein (2) et de la nacelle de disque de frein (3),
**caractérisé en ce que**
les moyens de fixation (4) sont des rivets aveugles avec une force de retenue dans les deux directions parallèlement à l'axe du rivet, choisis parmi des rivets étanches (41), des rivets à tige (42), des rivets soyés (43) et des rivets soyés démontables (44).

2. Disque de frein composite selon la revendication 1, **caractérisé en ce que** les dispositifs de fixation (4) sont des rivets soyés (43).

3. Disque de frein composite (1) selon la revendication 1, **caractérisé en ce que** la nacelle de frein à disque (3) présente des trous oblongs pour les moyens de fixation, l'étendue la plus longue des trous oblongs étant parallèle à un rayon passant par le centre du trou oblong.

4. Disque de frein composite (1) selon la revendication 1, **caractérisé en ce que** la nacelle de frein à disque (3) est réalisée en un matériau métallique.

5. Disque de frein composite (1) selon la revendication 1, **caractérisé en ce que** la bague de frein à disque (2) est réalisée en un matériau céramique.

6. Disque de frein composite selon la revendication 5, **caractérisé en ce que** le matériau céramique contient des fibres de renforcement.
